# EUROPÄISCHE PATENTANMELDUNG

(11) **EP 2 767 254 A2**
(43) Veröffentlichungstag der Anmeldung: **20.08.2014**
(21) Anmeldenummer: 14154491.6
(22) Anmeldetag: 10.02.2014
(51) Int. Cl.: A61C 8/00

(54) **Keramikimplantatsystem**

(30) Priorität: 14.02.2013 CH 4602013
(71) Anmelder: Z-Systems Schweiz AG, 4702 Oensingen (CH)
(72) Erfinder: Di Girolamo, Rubino, 6315 Oberägeri (CH); Hug, Thomas, 8703 Erlenbach (CH); Staudenmann, Roger, 3292 Busswil b. Büren (CH); Thomke, Ernst, 2540 Grenchen (CH)
(74) Vertreter: Frei Patent Attorneys

(57) **Zusammenfassung**

Das erfindungsgemässe Keramikimplantatsystem (40) enthält ein Implantat (20) mit einem proximalen Bereich (2) aufweisend einen Innenkonus und ein Abutment (1) mit einem distalen Bereich (32) aufweisend einen Aussenkonus. Der distale Bereich (2) des Abutment (1) und der proximaler Bereich (32) des Implantates (20) weisen in einem Klemmbereich (3, 33, 43) je mindestens eine konische Klemmfläche (4, 34, 44) auf, welche paarweise derart passgenau aufeinander angepasst sind, dass das Abutment (1) und das Implantat (20) des Keramikimplantatsystems (40) durch eine Klemmverbindung verbindbar sind.

## Beschreibung

Die Erfindung liegt auf dem Gebiet der Zahnmedizin und betrifft ein Keramikimplantatsystem aufweisend ein Keramikimplantat und ein Abutment.

Zweiteilige und mehrteilige Dentalimplantatsysteme enthalten nebst dem Implantat, das zum grössten Teil im Knochen verankert wird, ein Abutment, welches der Befestigung eines Aufbauelementes wie zum Beispiel einer Krone oder einer Prothese dient. Die meisten Dentalimplantate im Stand der Technik sind aus einem duktilen Material wie beispielsweise Titan oder Titanlegierungen hergestellt. Bei zweiteiligen Implantaten ist das Implantat meist aus einem duktilen Material wie Titan oder Titanlegierungen gefertigt und das Abutment ist oft auch aus einem duktilen Material oder aus Keramik gefertigt. Das Abutment wird meist mit einer Abutmentschraube aus einem duktilen Material im Implantat befestigt.

Keramikimplantate bieten gegenüber Titanimplantaten jedoch einige grosse Vorteile, insbesondere hinsichtlich ihrer hervorragenden Biokompatibilität, und auch aus ästhetischen Gründen werden sie oftmals bevorzugt.

Keramikimplantate haben gegenüber Titanimplantaten jedoch den Nachteil, dass Keramikmaterial, insbesondere Oxidkeramik wie Zirkonoxid-basierte Keramik oder Aluminiumoxid-basierte Keramik ein sprödhartes Material ist. Dies bewirkt insbesondere eine höhere Bruchanfälligkeit und verlangt aufwändigere Herstellungsmethoden im Vergleich zu Titanimplantaten. Es bleibt eine Herausforderung, die technische Ausgestaltung von Keramikimplantatsystemen auf die sprödharten Materialeigenschaften des Keramikmaterials abzustimmen.

Die erhöhte Bruchanfälligkeit bedingt durch das sprödharte Keramikmaterial wirkt sich bei zweiteiligen Implantatsystemen noch mehr aus als bei einteiligen Implantaten. Denn die Verbindung zwischen dem im Knochen implantierten Keramikimplantat und dem proximal zum Implantat im Zahnfleischbereich angeordneten Abutment ist besonders bruchanfällig, insbesondere bei einer Schraubverbindung zwischen Implantat und Abutment. Im Stand der Technik, beispielsweise in EP 1 617 783, sind denn auch einteilige Keramikimplantate beschrieben, welche nicht auch noch diese zusätzliche Bruchanfälligkeit bedingt durch die Abutment-Implantat-Verbindung aufweisen.

In der zahnmedizinischen Praxis werden jedoch gerade zweiteilige Implantatsysteme gegenüber einteiligen Implantaten oftmals bevorzugt. Auf Grund der verschiedenen Kombinationsmöglichkeiten eines mehrteiligen Implantatsystems zeichnen sie sich durch besonders vielfältige Einsatzmöglichkeiten in der Zahnprothetik aus. Ein weiterer Vorteil zweiteiliger Implantate ist, dass sie eine verdeckte Einheilung für das Einwachsen des Implantates im Knochen gewährleisten, während einteilige Implantate in der Einheilphase aus dem Zahnfleisch herausragen und vor äusseren Einflüssen geschützt werden müssen. Oft sind mehrteilige Implantatsysteme vorteilhafterweise auch mit mehrfach kompatiblen Implantat-Plattformen und mit Abutments angepasst für handelsübliche Matrizensystemen ausgerüstet. Ein weiterer grosser Vorteil von zweiteiligen Implantatsystemen, dass auch abgewinkelte Abutments mit dem Implantat verbunden werden können.

Im Stand der Technik werden auch zweiteilige Keramikimplantatsysteme beschrieben in welchen das Abutment mit einer Klebverbindung im Implantat befestigt wird, beispielsweise in EP 1 713 411 oder in CH 703 012. Es zeigt sich allerdings, dass auch mit einer Klebverbindung zweiteilige Keramikimplantatsysteme gegenüber vergleichbaren einteiligen Keramikimplantaten eine erhöhte Bruchanfälligkeit aufweisen.

Es ist deshalb die Aufgabe der vorliegenden Erfindung, ein Keramikimplantatsystem bereitzustellen, welches zweiteilig ist und sich durch eine Bruchresistenz auszeichnet, welche vergleichbar gut ist wie jene von einteiligen Keramikimplantaten mit einer möglichst identischen Aussenkontur und welche oben genannte Vorteile von zweiteiligen Implantaten aufweisen.

Diese Aufgabe wird gelöst durch ein Keramikimplantatsystem gemäss Anspruch 1. Die abhängigen Ansprüche beanspruchen weitere Ausführungsformen.

Das erfindungsgemässe Keramikimplantatsystem enthält ein Implantat mit einem proximalen Bereich aufweisend einen Innenkonus und ein Abutment mit einem distalen Bereich (2) aufweisend einen Aussenkonus. Der distale Bereich des Abutment und der proximale Bereich des Implantates weisen in einem Klemmbereich je mindestens ein Paar konischer Klemmflächen auf, welche paarweise derart passgenau aufeinander angepasst sind, dass das Abutment und das Implantat des Keramikimplantatsystems durch eine Klemmverbindung verbindbar sind.

Das Keramikimplantatsystem ist definiert als ein zweiteiliges oder ein mehrteiliges Zahnimplantatsystem und kann ausser dem Implantat und dem Abutment noch weitere Teile enthalten. In diesem Text wird, wenn nichts anderes vermerkt ist, auch mit dem Begriff Implantatsystem das Keramikimplantatsystem bezeichnet.

Das Implantat des Keramikimplantatsystems besteht aus Keramikmaterial, insbesondere aus Oxidkeramik wie Zirkonoxid-basierte Keramik, insbesondere Yttrium-stabilisieirte Zirkonoxid-basierte Keramik oder Aluminiumoxid-basierte Keramik. Das Abutment besteht in manchen Ausführungsformen ebenfalls aus Keramikmaterial. In anderen Ausführungsformen enthält das Abutment sowohl Keramikmaterial als auch andere Materialien, wie beispielsweise Teile aus Titan oder Titanlegierungen oder das Abutment besteht aus einem oder aus mehreren Nicht-Keramik Materialien.

Der Klemmbereich des verbundenen Implantatsystems bzw. des Implantates und des Abutments, ist ein Bereich der Oberfläche von Implantat und Abutment innerhalb eines axialen Abschnitts des distalen Bereich des Abutments und des proximalen Bereichs des Implantates, in welchem die passgenau gefertigten konischen Klemmflächen des mindestens einen Paares angeordnet sind, welche die Klemmverbindung zwischen dem Implantat und dem Abutment bewerkstelligen.

Die passgenaue konische Klemmfläche des Abutments ist definiert als mindestens ein Teil einer Mantelfläche eines Aussenkonus im Klemmbereich des distalen Bereichs des Abutments und die passgenaue konische Klemmfläche des Implantates ist definiert als mindestens ein Teil einer Mantelfläche eines Innenkonus im Klemmbereich des proximalen Bereichs des Implantates. In diesem Text wird die passgenaue konische Klemmfläche auch kürzer als konische Klemmfläche oder einfach als Klemmfläche bezeichnet.

Die mindestens eine konische Klemmfläche des proximalen Bereichs des Implantates ist in einem Hohlraum angeordnet. Das distale Ende dieses Hohlraums definiert das distale Ende des proximalen Bereichs des Implantates.

Der distale Bereich des Abutments aufweisend die mindestens eine konische Klemmfläche ist im verbundenen Zustand des Implantatsystems in den Hohlraum des proximalen Bereichs des Implantates eingeführt. Das proximale Ende des distalen Bereichs des Abutments ist im verbundenen Zustand des Implantatsystems im Wesentlichen auf der gleichen axialen Höhe (axialen Position) angeordnet wie das proximale Ende Implantates.

Der Aussenkonus- und der entsprechende Innenkonus im Klemmbereich sind paarweise als steiler Kegelstumpf mit einem identischen oder nahezu identischen Öffnungswinkel passgenau gefertigt. Ein identischer oder nahezu identischer Öffnungswinkel ermöglicht die Klemmwirkung, die im verbundenen Zustand des Keramikimplantatsystems wirkt, wenn der Aussenkonus in den Innenkonus gedrückt ist. Ein nahezu identischer Öffnungswinkel im Bereich der Fertigungsmöglichkeiten weist eine Differenz zwischen dem Öffnungswinkel des Innenkonus und des Aussenkonus auf im Bereich von beispielsweise bis zu 0.5°, bis zu 1° oder bis zu 1.5° je nach Ausführungsform.

Im Stand der Technik sind derartige Reibschluss- oder Klemmverbindungen zwischen einem Aussen- und einem Innenkonus vom Prinzip des Morsekonus bekannt aus der Maschinenindustrie im Zusammenhang mit der Befestigung und Kraftübertragung zwischen einem Werkzeug und einer Werkzeugmaschine. Dabei wird beispielsweise ein Aussenkonus eines Werkzeuges in einen Innenkonus einer Werkzeugmaschine gedrückt und festgeklemmt. Die Öffnungswinkel solcher bekannten Morsekegel aus der Werkzeugindustrie liegen in einem Bereich von 2° bis 3°. Überraschenderweise lässt sich dieses Prinzip des Morsekonus gemäss vorliegender Erfindung auf ein Implantatsystem, das aus Keramik hergestellt ist, übertragen.

Da Keramik ein sprödhartes Material ist, müssen Ring- und Zugspannungen bei Keramikprodukten möglichst vermieden werden, um einen Materialbruch möglichst zu verhindern. Deshalb ist die technische Ausgestaltung des erfindungsgemässen Keramikimplantatsystems so optimiert, dass Ring- und Zugspannungen, welche zu Implantatbrüchen führen können, minimal sind.

Die Klemmverbindung im verbundenen Keramikimplantatsystem entsteht sobald das Abutment in das Implantat gedrückt wird. Zur Entfernung eines Aussenkonus, welcher in einem Innenkonus festsitzt, muss die Haftreibung zwischen den überlappenden Bereichen der Mantelflächen des Innen- und Aussenkonus überwunden werden. Im verbundenen Implantatsystem überlappen sich die passgenau gefertigten konischen Klemmflächen im Wesentlichen auf gleicher axialer Höhe. Die überlappenden Klemmflächen von Implantat und Abutment bewirken die Klemmverbindung. Entsprechend begünstigen grosse überlappende konische Klemmflächen eine starke Klemmverbindung. Zudem ist die Klemmverbindung umso stärker, je kleiner der Öffnungswinkel des Innen- und des Aussenkonus ist, deren Mantelflächen, oder Teile von deren Mantelflächen, die Klemmflächen bilden.

Es ist ein grosser Vorteil des Keramikimplantatsystems gemäss der vorliegenden Erfindung, dass die Klemmverbindung zwischen Abutment und Implantat über eine grosse Berührungs- bzw. Reibungsfläche wirkt. Dies führt zu einer starken Verbindung und insbesondere auch zu einer sehr grossen Kraftübertragungsfläche zwischen Abutment und Implantat. Im Vergleich zu aus dem Stand der Technik bekannten Keramikimplantatsystemen ist die Kraftübertragungsfläche bedeutend grösser. Auf das Abutment einwirkende Kräfte werden im verbundenen Implantatsystem über die Kraftübertragungsfläche verteilt auf das Implantat übertragen, so dass bei einer grossen Kraftübertragungsfläche vergleichsweise wenig hohe lokale Spannungsspitzen und wenig Brüche auftreten. Das Keramikimplantatsystem ist deshalb vergleichsweise bruchresistenter als bekannte zweiteilige Keramikimplantatsysteme, bei welchen auf das Abutment einwirkende Kraft nur punktuell oder über eine kleinere Fläche erfolgt.

Der Betrag des Öffnungswinkel des Aussen- und des Innenkonus wird klein genug gewählt, um im verbundenen Implantatsystem eine ausreichend starke Klemmverbindung zwischen Implantat und Abutment zu gewährleisten und gross genug, um die axiale Höhe (axiale Ausdehnung) des Innenhohlraums zu minimieren. Der Betrag des Öffnungswinkel des Aussen- und des Innenkonus liegt in einem Bereich von 2° bis 15°, insbesondere in einem Bereich mit einer Untergrenze von 2° bis 3° oder bis 4° und einer Obergrenze von 7° bis 10° oder bis 12° oder in einem Bereich von 5° bis 9°, 6° bis 8°, oder 6.5° bis 7.5°.

Bei einem sehr kleinen Öffnungswinkel von Aussen- und Innenkonus beispielsweise unter 3°, unter 4° oder unter 5° werden manche Ausführungsformen mit einer im Vergleich zu Ausführungsformen mit einem grösseren Öffnungswinkel erhöhten Fertigungsgenauigkeit hergestellt. Manche Ausführungsformen, deren konische Klemmflächen die Mantelflächen oder Teile von Mantelflächen von einem Innen- und Aussenkonus mit einem sehr kleinen Öffnungswinkel sind, werden mit einer maximalen Abweichung zwischen den Öffnungswinkeln von Innen- und Aussenkonus, welche nicht grösser ist als 0.5° oder 0.4° oder 0.3° hergestellt.

In manchen Ausführungsformen weist der Klemmbereich ein einziges Paar passgenauer konischer Klemmflächen auf, nämlich eine konische Klemmfläche des

Abutments und eine konische Klemmfläche des Implantates, welche in manchen dieser Ausführungsformen beide eine durchgehende Mantelfläche des Aussen- bzw. des Innenkonus aufweisen. In andern Ausführungsformen weist der Klemmbereich mehrere Paare passgenauer konischer Klemmflächen auf, beispielsweise Mantelflächen des Aussen- bzw. des Innenkonus, welche unterbrochen sind beispielsweise durch Einschnürungen, Rillen, Ausbuchtungen oder zylindrische Oberflächen. In manchen beispielhaften Ausführungsformen mit Einschnürungen oder Rillen verlaufen diese senkrecht zur Längsachse des Abutments und des Implantates oder parallel zur Längsachse.

In manchen Ausführungsformen weist der Klemmbereich mehrere Paare passgenauer konischer Klemmflächen auf, nämlich mindestens zwei konische Klemmflächen des Abutments und mindestens zwei konische Klemmflächen des Implantates, welche die Mantelflächen sind von mindestens zwei je einander passgenaue angepassten Aussenkonus des Abutments und Innenkonus des Implantates. Die mindestens zwei je einander passgenaue angepassten Aussenkonus und Innenkonus können unterschiedlich grosse Öffnungswinkel aufweisen. Entsprechend weisen manche dieser Ausführungsformen mit mehreren Paaren passgenauer konischer Klemmflächen entsprechend dem Öffnungswinkel unterschiedlich steile Klemmflächen auf.

Eine mittlere axiale Höhe (axiale Position) des Klemmbereichs des verbundenen Keramikimplantatsystems mit einem Paar passgenauer konischer Klemmflächen,. Abutments und Implantates befindet sich in der Mitte zwischen dem proximalen Ende des einen Paars passgenauer konischer Klemmflächen und dem distalen Ende dieser konischen Klemmflächen. In Ausführungsformen mit mehr als einem Paar passgenauer konischer Klemmflächen befindet sich die mittlere axiale Höhe des Klemmbereichs in der Mitte zwischen dem proximalen Ende der am weitesten proximal angeordneten passgenauen konischen Klemmfläche und dem distalen Ende der am weitesten distal angeordneten passgenauen konischen Klemmfläche.

Eine Knochenhöhe des Implantates bzw. des Implantatsystems ist definiert als das proximale Ende des enossalen Bereichs des Implantates. Der enossale Bereich des Implantates erstreckt sich vom distalen Ende des Implantates bis zur Knochenhöhe, also bis zu jener axialen Höhe des Implantates bzw. Implantatsystems, bis zu welcher das Implantat für die Verankerung und das Einwachsen des Implantates im Knochengewebe vorgesehen ist.

In manchen Ausführungsformen entspricht die Knochenhöhe im Wesentlichen dem proximalen Ende des Gewindeauslaufs. In manchen Ausführungsformen wird der enossale Bereich aufgeraut, beispielsweise sandgestrahlt, und die Knochenhöhe entspricht im Wesentlichen dem proximalen Ende des sandgestrahlten Bereichs.

Eine Einbetthöhe ist jene axiale Höhe eines Implantatsystems, bis zu welcher dieses eingebettet wird, für die Durchführung von Bruchtests gemäss der Isonorm 14801 (Status: 2013). Die Isonorm 14801 verlangt, dass die Einbetthöhe 3 mm distal zur Knochenhöhe angeordnet ist. Daraus ergibt sich, dass in Ausführungsformen des Keramikimplantatsystems mit einer mittleren axialen Höhe des Klemmbereichs in einem Bereich zwischen der Knochenhöhe und der Einbetthöhe, die mittlere axiale Höhe nicht mehr als um 1.5 mm von der Mitte zwischen der Knochenhöhe und der Einbetthöhe abweicht.

In manchen Ausführungsformen weicht die mittlere axiale Höhe des Klemmbereichs nicht mehr als um 3 mm, und insbesondere nicht mehr als um 2.5 mm oder 2 mm, 1.5 mm, 1 mm oder 0.5 mm von der Mitte zwischen der Knochenhöhe und der Einbetthöhe ab.

Die mittlere axiale Höhe des Klemmbereichs ist ein Angelpunkt zwischen den Hebeln, die bei der Übertragung von Kräften, die vom Abutment auf das Implantat übertragen werden. An diesem Angelpunkt sind die Materialspannungen am höchsten und deshalb sind Implantatbrüche insbesondere auf der mittleren axialen Höhe des Klemmbereichs zu erwarten. Die Bruchanfälligkeit wird vergleichsweise kleiner bei manchen Ausführungsformen des Implantatsystemen mit einem Angelpunkt der distal zur Knochenhöhe, oder noch weiter distal beispielsweise im Wesentlichen auf der Einbetthöhe liegt. Ausserdem verkleinert eine grössere Wandstärke um den Innenhohlraum im proximalen Bereich des Implantates die Bruchanfälligkeit.

In manchen Ausführungsformen wird die mittlere axiale Höhe des Klemmbereichs auf oder unmittelbar distal zur Einbetthöhe angeordnet, oder beispielsweise in einem Bereich von bis zu 0.5 mm oder 1 mm distal zur Einbetthöhe angeordnet. In diesen Ausführungsformen wird die Hebelwirkung von Kräften, die vom Abutment auf das Implantat übertragen werden minimiert.

In manchen Ausführungsformen wird die mittlere axiale Höhe des Klemmbereichs, bzw. der Angelpunkt, beispielsweise auf der Mitte zwischen der Knochenhöhe und der Einbetthöhe, oder auf einer axialen Höhe in einem Bereich zwischen dem proximalen Ende des Gewindes und der Knochenhöhe insbesondere im Bereich des Gewindeauslaufs, angeordnet. In diesen Ausführungsformen ist die Hebelwirkung von Kräften, die vom Abutment auf das Implantat übertragen werden, im Vergleich zu den vorgängig beschriebenen Ausführungsformen, in welchen der Angelpunkt auf der Einbetthöhe angeordnet ist, erhöht. Andererseits ist in beispielhaften Ausführungsformen, in welchen der Angelpunkt auf der Mitte zwischen der Knochenhöhe und der Einbetthöhe oder auf einer axialen Höhe in einem Bereich zwischen dem proximalen Ende des Gewindes und der Knochenhöhe, insbesondere im Bereich des Gewindeauslaufs oder unmittelbar proximal zum Gewindeauslauf beispielsweise bis zu 0.5 mm proximal zum Gewindeauslauf, angeordnet ist vorteilhafterweise die Wandstärke um den Innenhohlraum im proximalen Bereich des Implantates vergleichsweise grösser. Denn in diesen Ausführungsformen liegt der Angelpunkt in einem Bereich proximal zum Gewinde oder proximal zum Gewindeauslauf.

Im Vergleich dazu ist die Wandstärke um den Innenhohlraum kleiner, wenn das distale Ende des Innenholraums in die Gewindezone ragt. In der Gewindezone ist der Kernduchmesser des Gewindes der massgebliche Implantatdurchmesser für die Bruchresistenz. Wo der Innenhohlraum mit der Gewindezone des Implantates überlappt, bewirkt der kleinere Kernduchmesser als für die Bruchresistenz massgeblicher Implantatdurchmesser in der Gewindezone eine kleinere Wandstärke des Innenhohlraumes.

In manchen Ausführungsformen wird die mittlere axialen Höhe des Klemmbereichs bis zu 1 mm, bis zu 1.5 mm, bis zu 2 mm oder bis zu 3 mm proximal zur Mitte zwischen der Knochenhöhe und der Einbetthöhe angeordnet. In manchen Ausführungsformen wird die mittlere axiale Höhe des Klemmbereichs bis zu 1 mm, bis zu 1.5 mm, bis zu 2 mm, oder bis zu 3mm distal zur Einbetthöhe angeordnet.

In manchen Ausführungsformen des Keramikimplantatsystems wird die Klemmverbindung im distalen Bereich des Abutments und dem proximalen Bereich des Implantates ergänzt durch eine zusätzliche Klebeverbindung mittels mindestens je einer Klebezone, welche paarweise einander im distalen Bereich des Abutments und im proximalen Bereich des Implantates zugeordnet sind. Bevor das Abutment in das Implantat eingeführt wird, wird ein Leim auf das Abutment und/oder auf das Implantat aufgetragen, wie dies aus dem Stand der Technik für geklebte zweiteilige Keramikimplantate bekannt ist. Eine solche zusätzliche Klebeverbindung bewirkt eine zusätzliche Sicherung der Verbindung von Abutment mit Implantat über eine längere Zeitspanne, während welcher das implantierte Implantatsystem Mikrobewegungen ausgesetzt ist.

In manchen Ausführungsformen des Keramikimplantatsystems mit mindestens einer Klebezone ist bzw. sind diese distal oder proximal zum Klemmbereich angeordnet. Das heisst in diesen Ausführungsformen sind das Implantat und das Abutment mit der mindestens einen Klebezone derart ausgerüstet, dass der Klemmbereich frei von dem aufgetragenen Leim bleibt. Die mindestens eine Klebezone befindet sich beispielsweise an der distalen Endfläche des Abutments und entsprechend am distalen Ende des Hohlraums im proximalen Bereich des Implantates und/oder in mindestens einem Leimspalt, welcher beispielsweise in einem zylindrischen Bereich des Abutments bzw. des Implantates proximal zum Klemmbereich angeordnet ist, und/oder in einem Bereich nahe der Öffnung des Hohlraums im proximalen Bereich des Implantates in einer Innenstruktur, welche auch als Eindrehgeometrie dient und/oder in anderen Zonen des proximalen Implantatbereichs, welche proximal zum Klemmbereich angeordnet sind.

In manchen Ausführungsformen des Keramikimplantatsystems mit einer zusätzlichen Klebeverbindung ist mindestens eine Klebezone im Klemmbereich angeordnet. In manchen dieser Ausführungsformen werden die konischen Klemmflächen durch Klebezonen unterbrochen. In diesen oder anderen Ausführungsformen, in welchen mindestens eine Klebezone im Klemmbereich angeordnet ist, kann die Klebezone mindestens teilweise mit einem oder mehreren konischen Klemmflächen überlappen. Klebezonen, welche konische Klemmflächen überlappen, sind als Leimspalt ausgestaltet. Ein solcher Leimspalt weist eine Breite auf, welche gleich gross oder nahezu gleich gross ist, wie die eine Korngrösse der Körner im verwendeten Leim. Diese Abstimmung zwischen der Breite des Leimspalts und der Korngrösse der Körner des verwendeten Leims gewährleistet neben der Klebverbindung weiterhin die Klemmverbindung im Bereich der konischen Klemmflächen.

### Figurenliste

- **Fig. 1:**: Ausführungsbeispiel eines Abutments mit einem Klemmbereich:
a: Eine perspektivische Aufsicht auf das beispielhafte Abutment
b: Eine erste seitliche Aufsicht auf das beispielhafte Abutment
c: Eine zweite seitliche Aufsicht beispielhafte auf das Abutment
- **Fig. 2:**: Ausführungsbeispiel eines Implantates mit einem Klemmbereich:
a: Aufsicht auf das beispielhafte Implantat
b: Teilschnitt durch das beispielhafte Implantat umfassend einen proximalen Bereich des Implantats
- **Fig. 3:**: Ausführungsbeispiel eines verbundenen Keramikimplantatsystems in einer beispielhaften Ausführungsform mit einem Klemmbereich und zusätzlich mit Klebezonen.
a: Aufsicht auf das beispielhafte Keramikimplantatsystem
b: Schnitt durch das beispielhafte Keramikimplantatsystem

### Detaillierte Beschreibung anhand der Figuren

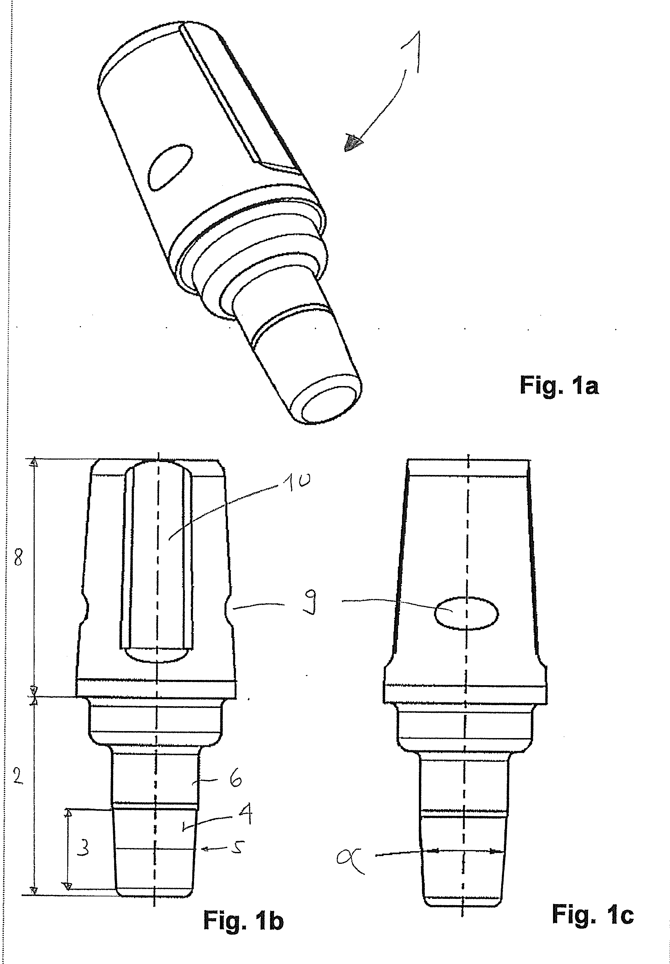

**Fig. 1** zeigt ein Ausführungsbeispiel eines Abutments 1 eines Keramikimplantatsystems 40, wobei in **Fig. 1a** eine perspektivische Aufsicht auf das beispielhafte Abutment 1, in **Fig. 1b** eine erste seitliche Aufsicht und in **Fig. 1c** eine zweite seitliche Aufsicht auf das beispielhafte Abutment 1 dargestellt ist.

Das beispielhafte Abutment 1 weist einen distalen Bereich 2 auf mit einem Klemmbereich 3, in welchem eine konische Klemmfläche 4 angeordnet ist und welcher Klemmbereich 3 eine mittlere axiale Höhe 5 aufweist. Die konische Klemmfläche 4 ist eine Mantelfläche eines Aussenkonus im Klemmbereich 3. In dieser beispielhaften Ausführungsform enthält der Klemmbereich 3 nur eine konische Klemmfläche 4, die sich über den ganzen Klemmbereich 3 erstreckt. Die mittlere axiale Höhe 5 des Klemmbereichs 3 stimmt deshalb mit der mittleren axialen Höhe des Aussenkonus überein. Der Aussenkonus ist ein steiler Konus und er weist einen Öffnungswinkel α auf, der beispielsweise 2° bis 15° beträgt.

In anderen, nicht dargestellten, beispielhaften Ausführungsformen des Abutments 1 sind im Klemmbereich 3 mehrere konische Klemmflächen 4 angeordnet, welche paarweise mit entsprechenden konischen Klemmflächen 34 des Implantates 20 einander passgenau angepasst sind. In Ausführungsformen des Abutments 1 mit mehreren konischen Abschnitten 4 im Klemmbereich 3, können die konischen Klemmflächen 4 verschiedene Teile der Mantelfläche eines Aussenkonus sein, beispielsweise weil die Mantelfläche dieses Aussenkonus durch eine oder mehrere Einschnürungen in horizontaler Richtung, Rillen in vertikaler Richtung oder zylindrische Abschnitte oder andere Flächen unterbrochen ist. In weiteren nicht gezeichneten beispielhaften Ausführungsformen von Abutments 1 mit mehreren konischen Klemmflächen 4 können diese Mantelflächen oder Teile von Mantelflächen von verschiedenen Aussenkonus sein.

Die in Fig. 1 beispielhafte Ausführungsform des Abutments 1 weist im distalen Bereich 2 auch einen zylindrischen Abschnitt 6 auf. Ferner weist das Abutment 1 einen proximalen Bereich 8 auf, der proximal zum distalen Bereich 2 angeordnet ist. Der proximale Bereich 8 des Abutments 1 wird nicht in das Implantat 11 eines Keramikimplantatsystems 30 eingeführt und dient der hier nicht gezeichneten Verbindung des Abutments mit Aufbauelementen wie beispielsweise Kronen, Brücken und dergleichen. In manchen Ausführungsformen weist der proximale Bereich eine Patrize auf für ein handelsübliches Matrizensystem für einen Zahnersatz, wie zum Beispiel die im Stand der Technik bekannten Novaloc™ oder Pro-Snap Matrizensysteme. In weiteren, nicht gezeichneten Ausführungsformen, weist der proximale Bereich 8 des Abutments 1 einen abgewinkelten Pfosten auf.

Der proximale Bereich 8 des in Figur 1 dargestellten beispielhaften Abutments 1 weist gleiche Aussenkonturen auf wie ein beispielhaftes nicht gezeichnetes einteiliges System mit einer Halterungsstruktur 9 für ein Werkzeug und einer angeschliffenen Seite 10 für die Übertragung eines Drehmoments, so dass dasselbe Werkzeug wie für das beispielhaften einteiligen System verwendet werden kann.

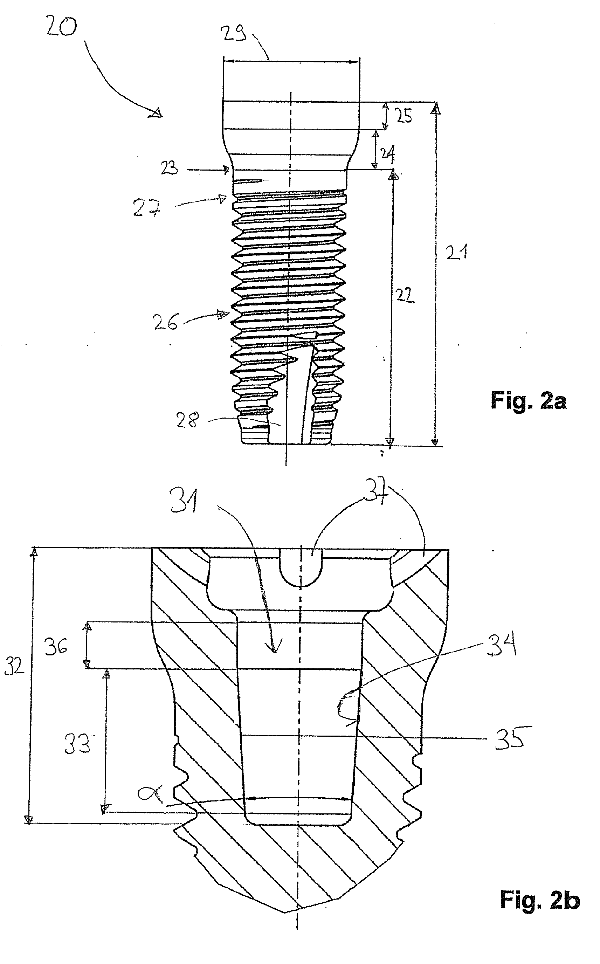

**Fig. 2** zeigt ein Ausführungsbeispiel eines Implantates 20 eines Keramikimplantatsystems 40, wobei in **Fig. 2a** eine Aufsicht auf das beispielhafte Implantat 20 und in **Fig. 2b** ein Teilschnitt durch das beispielhafte Implantat 20 umfassend einen proximalen Bereich 32 dargestellt ist.

Die in **Fig. 2a** dargestellte Aufsicht auf das beispielhafte Implantat 20 weist eine Implantatlänge 21 auf, welche sich vom proximalen zum distalen Ende des Implantates erstreckt und eine Gewindezone 22, welche sich vom distalen Ende des Implantates bis zum proximalen Ende des Gewindes 26, bzw. des Gewindeauslaufs 27 erstreckt. Die Implantatlänge 21 misst beispielsweise 6 mm bis 16 mm, insbesondere 6 mm bis 15 mm und die Gewindezone 22 misst beispielsweise 5 mm bis 14 mm, insbesondere 8 mm bis 13 mm. Die dargestellte beispielhafte Ausführungsform des Implantates 20 weist in einem Bereich gegen ein distales Ende der Gewindezone 22 mindestens eine Nut 28 und mit Schneidekanten auf.

Eine vorgesehene Knochenhöhe 23 ist in manchen Ausführungsformen für eine axiale Höhe im Wesentlichen am proximalen Ende des Gewindes oder Gewindeauslaufs vorgesehen. Das heisst in manchen Ausführungsformen ist die vorgesehene Knochenhöhe 23 unmittelbar am Ende des Gewindes oder Gewindeauslaufs angeordnet oder sie ist beispielsweise in manchen Ausführungsformen bis zu 0.5 mm oder bis zu 1 mm proximal zum Ende des Gewindeauslauf angeordnet.

In manchen Ausführungsformen des Implantates beträgt die Knochenhöhe 23 7 mm bis 14 mm, beispielsweise 8 mm, 9 mm, 10 mm, 11.5 mm oder 13 mm. Die Knochenhöhe 23 des beispielhaft gezeichneten Implantats 20 bzw. des Implantatsystems 40 ist auf einer axialen Höhe in einem Bereich zwischen dem proximalen Ende des Gewindeauslaufs und dem distalen Ende einer beispielhaften Tulpe 24 angeordnet.

In der beispielhaft dargestellten Ausführungsform ist das distale Ende der beispielhaften Tulpe 24 unmittelbar proximal zur Knochenhöhe 23 angeordnet. Im Bereich der Tulpe erweitert sich der Implantatdurchmesser von einem Aussendurchmesser des Gewindes auf den Implantatdurchmesser 29 am proximalen Ende des Implantates 20, was die Bruchresistenz des Implantates in bekannter Weise erhöht. Der Aussendurchmesser des Gewindes misst beispielsweise 3 mm bis 6 mm, insbesondere 3.6 mm, 4mm, 4.5 mm, 5mm oder 5.5 mm. Der Implantatdurchmesser 29 am proximalen Ende des Implantates ist in solchen Ausführungsformen mit einer Tulpe 24 grösser als der Aussendurchmesser des Gewindes und er misst beispielsweise 0.5 mm bis 1.5 mm mehr als der Aussendurchmesser des Gewindes. Proximal zur Tulpe 24 liegt in der dargestellten beispielhaften Ausführungsform eine zylindrische Zone 25. In manchen hier nicht dargestellten Ausführungsformen des Implantates 20 ist in der zylindrischen Zone beispielsweise eine Aussenstruktur angeordnet, welche als Eindrehgeometrie für ein Eindrehwerkzeug dient, um das Implantat 20 in ein Knochengewebe einzudrehen.

Der in **Fig. 2b** gezeichnete Teilschnitt, welcher einen proximalen Bereich 32 des beispielhaften Implantats 20 umfasst, zeigt einen Innenhohlraum 31, welcher sich an einer proximalen Stirnseite des Implantates 20 öffnet und in welchen das Abutment 1 einführbar ist. Das distale Ende des Innenholraums 31 definiert das distale Ende des proximalen Bereichs 32. Dieser weist einen Klemmbereich 33 auf, in welchem eine konische Klemmfläche 34 angeordnet ist mit einer mittleren axiale Höhe 35. Die konische Klemmfläche 34 ist eine Mantelfläche eines Innenkonus im Klemmbereich 33. In dieser gezeichneten beispielhaften Ausführungsform enthält der Klemmbereich nur eine konische Klemmfläche 34, die sich über den ganzen Klemmbereich 33 erstreckt. Die mittlere axiale Höhe 35 des Klemmbereichs 33 stimmt deshalb mit der mittleren axialen Höhe des Innenkonus überein. Der Aussenkonus ist ein steiler Konus und er weist einen Öffnungswinkel α auf, der beispielsweise 2° bis 15° beträgt.

In der beispielhaft dargestellten Ausführungsform ist die mittlere axiale Höhe 35 des Klemmbereichs 33 im Wesentlichen am proximalen Ende des Gewindeauslaufs angeordnet. Diese Anordnung der mittleren axialen Höhe 35, bzw. eines Angelpunktes, entspricht einem Kompromiss zwischen einer möglichst distalen Versenkung der mittleren axialen Höhe des Klemmbereichs, bzw. des Angelpunktes, im enossalen Bereich des Implantates einerseits und einer Anordnung in einem Bereich mit einer möglichst grossen Wandstärke des Implantates andererseits.

In anderen, nicht dargestellten, beispielhaften Ausführungsformen des Implantates sind im Klemmbereich 33 mehrere konische Klemmflächen 34 angeordnet, welche paarweise mit entsprechenden konischen Klemmflächen 4 des Abutments 1 passgenau einander angepasst sind. In Ausführungsformen des Implantates 20 mit mehreren konischen Klemmflächen 34 im Klemmbereich 33, können die konischen Klemmflächen 34 verschiedene Teile der Mantelfläche eines Innenkonus sein, beispielsweise, weil die Mantelfläche von einem Innenkonus durch eine oder mehrere Einschnürungen in horizontaler Richtung, Rillen in vertikaler Richtung oder zylindrische Abschnitte oder andere Flächen unterbrochen ist. In weiteren nicht gezeichneten beispielhaften Ausführungsformen von Implantaten 20 mit mehreren konischen Klemmflächen können diese Mantelflächen oder Teile von Mantelflächen von verschiedenen Innenkonus sein.

Die in Fig. 2b beispielhaft dargestellte Ausführungsform des Implantats 20 weist im proximalen Bereich 32 auch einen zylindrischen Abschnitt 36 auf. Ferner weist das Implantat 20 im Bereich der proximalen Öffnung des Innenhohlraums 31 Innenstrukturen 37 als Eindrehegeometrie auf, in welche mit einem Eindrehwerkzeug eingegriffen werden kann, um das Implantat 20 in ein Knochengewebe einzudrehen.

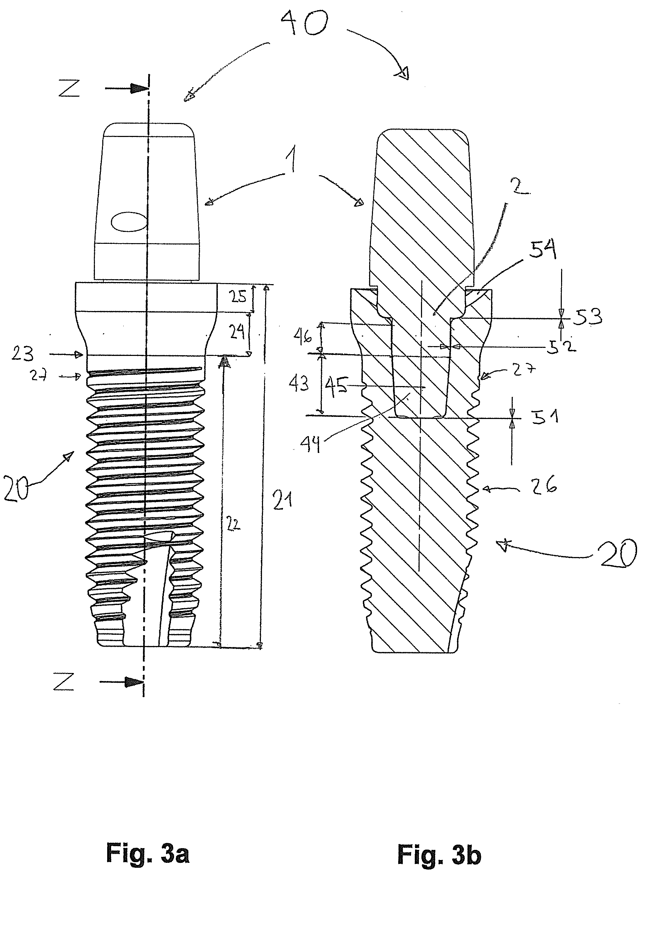

**Fig. 3****:** Ausführungsbeispiel eines Keramikimplantatsystems 40 im verbundenen Zustand in einer beispielhaften Ausführungsform mit einem Klemmbereich und zusätzlich mit mindestens einer Klebezone. **Fig. 3a** zeigt eine Aufsicht auf das beispielhafte Keramikimplantatsystem und **Fig. 3b** zeigt einen Schnitt entlang einer Verbindungslinie zwischen den Punkten N und N durch das beispielhafte Keramikimplantatsystem.

Im beispielhaft dargestellten Keramikimplantatsystem 40 im verbundenen Zustand ist der distale Bereich 2 des beispielhaften Abutment 1 in den Hohlraum 37 des beispielhaften Implantates 20 eingeführt. Das Implantatsystem 40, das Abutment 1 und das Implantat 20 weisen im Klemmbereich 3, 33, 43 konische Klemmflächen 4, 34, 44 auf mit einer beispielhaften Anordnung der mittleren axialen Höhe 5, 35, 45 des Klemmbereichs 3, 33, 43 im Bereich des Gewindeauslaufs 27.

Die vorgesehene Knochenhöhe 23 für das beispielhafte Keramikimplantatsystem 40 liegt proximal zum Gewindeauslauf 27 in einem Bereich von weniger als 3 mm, insbesondere weniger als 2 mm, 1mm oder 0.5mm oberhalb der mittleren axialen Höhe 5, 35, 45 des Klemmbereichs 3, 33, 43.

Das beispielhaft dargestellte Keramikimplantatsystem weist mehrere optionale Klebezonen auf: eine Klebezone 51 am distalen Ende des Abutments 1 bzw. am distalen Ende des proximalen Bereichs 32 und des Hohlraums 37 des Implantats 20; eine Klebezone 52 in einem Leimspalt entlang des zylindrischen Bereichs 6, 36, 46; eine Klebezone 53 in einem Leimspalt angeordnet an einem Sitz, wo das Abutment 1 in dem Hohlraum 31 des Implantats 20 aufsitzt; und eine Klebezone 54 in der Innenstruktur der Eindrehgeometrie. Weitere nicht gezeichnete Ausführungsformen von Keramikimplantatsystemen mit einer zusätzlichen Klebverbindung weisen andere, zusätzliche und/oder nicht alle dieser Klebezonen 51 bis 54 auf. In manchen Ausführungsformen mit mindestens einer Klebezone kann diese auch an anderer Stelle des Implantatsystems 40 angeordnet sein.

In manchen Keramikimplantatsystemen mit einer oder mehreren optionalen Klebezonen sind diese in einem Leimspalt des verbundenen Implantatsystems, bzw. im distalen Bereich des Abutments und/oder im proximale Bereich des Implantates angeordnet. Ein solcher Leimspalt kann beispielsweise ausserhalb oder sowohl ausserhalb als auch mindestens teilweise innerhalb des Klemm- und Kraftübertragungsbereichs angeordnet sein. In manchen Ausführungsformen mit einem Leimspalt, welcher insbesondere mindestens teilweise innerhalb des Klemm- und Kraftübertragungsbereich angeordnet ist, weist dieser eine Breite auf, die auf eine Korngrösse eines Leims oder eines Zementes abgestimmt ist, insbesondere eine Breite im Bereich von bis zu 100 µm, oder von 10 bis 80 µm, von 20 bis 70 µm oder von 30 bis 50 µm.

In manchen Ausführungsformen wird der Leimspalt im Klemmbereich beispielsweise durch Unterbrechung Mantelfläche des Innenkonus des Implantates und/oder des Aussenkonus des Abutments gebildet. Manche dieser Ausführungsformen weisen Einschnürungen oder Rillen in den konischen Klemmflächen des Abutments und / oder des Implantates auf.

Ein weiterer Aspekt der Erfindung betrifft ein Set, welches das Keramikimplantatsystem und einen Leim für mindestens eine Klebezone enthält.

## Patentansprüche

1. Keramikimplantatsystem (40) enthaltend ein Implantat (20) mit einem proximalen Bereich (32) aufweisend einen Innenkonus und enthaltend ein Abutment (1) mit einem distalen Bereich (2) aufweisend einen Aussenkonus **dadurch gekennzeichnet, dass** der distale Bereich (2) des Abutment (1) und der proximale Bereich (32) des Implantates (20) in einem Klemmbereich (3, 33, 43) je mindestens eine paarweise derart passgenau aufeinander angepasste konische Klemmfläche (4, 34) aufweisen, dass das Abutment (1) und das Implantat (20) des Keramikimplantatsystems (40) durch eine Klemmverbindung verbindbar sind.

2. Keramikimplantatsystem nach Anspruch 1, wobei der Aussenkonus im distalen Bereich (2) des Abutments (1) und der Innenkonus im proximalen Bereich (32) des Implantates (20) einen Öffnungswinkel α des Aussen- und des Innenkonus aufweisen in einem Bereich von 1.5° bis 15°, insbesondere in einem Bereich mit einer Untergrenze von 2° bis 3° oder bis 4° und einer Obergrenze von 7° bis 10° oder bis 12° oder in einem Bereich von 5° bis 9 ° oder 6° bis 8° oder 6.5° bis 7.5°.

3. Keramikimplantatsystem nach Anspruch 1 oder 2, wobei eine mittlere axiale Höhe (35) des Klemmbereichs (33), nicht mehr als um 3 mm, und insbesondere nicht mehr als um 2.5 mm, 2 mm, 1.5 mm, 1 mm oder 0.5 mm von der Mitte zwischen einer Knochenhöhe (23) und einer Einbetthöhe abweicht.

4. 02Keramikimplantatsystem nach einem der Ansprüche 1 bis 3, wobei der distale Bereich (2) des Abutment (1) und der proximale Bereich (32) des Implantates (20) mindestens eine Klebezone 51, 52, 53, 54 aufweisen.

5. Keramikimplantatsystem nach Anspruch 4, wobei die mindestens eine Klebezone 51, 52, 53, 54 distal oder proximal zum Klemmbereich (3, 33, 43) angeordnet ist.

6. Keramikimplantatsystem nach Anspruch 5, wobei zusätzlich mindestens eine weitere Klebezone im Klemmbereich (3, 33, 43) angeordnet ist.

7. Keramikimplantatsystem nach einem der Ansprüche 4 bis 6, wobei mindestens eine Klebezone ausserhalb der konischen Klemmflächen (4, 34) für die Klemmverbindung angeordnet ist.

8. Keramikimplantatsystem nach einem der Ansprüche 4 bis 7, welches im verbundenen Zustand im distalen Bereich (2) des Abutment (1) beziehungsweise im proximalen Bereich (32) des Implantates (20) mindestens einen Leimspalt aufweist.

9. Keramikimplantatsystem nach Anspruch 8, wobei der Leimspalt ausserhalb oder sowohl ausserhalb als auch mindestens teilweise innerhalb des Klemmbereichs (3, 33, 43) angeordnet ist.

10. Keramikimplantatsystem nach Anspruch 8 oder 9, wobei eine Breite des Leimspalt innerhalb des Klemmbereichs (3, 33, 43) auf eine Korngrösse eines Leims oder eines Zementes abgestimmt ist und beispielsweise eine Breite im Bereich von 1 bis 100 µm, oder 10 bis 80 µm oder 20 bis 70 µm, oder 30 bis 50 µm aufweist.

11. Set aufweisend ein Keramikimplantatsystem (40) nach einem der Ansprüche 4 bis 10 und einen Leim für mindestens eine Klebezone.
